# EUROPÄISCHE PATENTANMELDUNG

(11) **EP 1 442 780 A1**
(43) Veröffentlichungstag der Anmeldung: **04.08.2004**
(21) Anmeldenummer: 04000289.1
(22) Anmeldetag: 09.01.2004
(51) Int. Cl.: B01D 53/34, B01D 53/44, B01D 53/72, F23G 7/06

(54) **Verfahren zur Reinigung durch Verbrennung eines Abgases aus einer heterogenkatalysierten Gasphasenoxidation**

(30) Priorität: 03.02.2003 DE 10304154
(71) Anmelder: BASF AKTIENGESELLSCHAFT, 67056 Ludwigshafen (DE)
(72) Erfinder: Schiketanz, Walter, Dr., 67227 Frankenthal (DE)

(57) **Zusammenfassung**

Verfahren zur Verbrennung eines Sauerstoff und eine brennbare Komponente enthaltenden Abgases (1), welches aus der heterogenkatalysierten Gasphasenoxidation einer anorganischen oder organischen Verbindung stammt, in einer Brennkammer (B), bei dem man das Abgas auf eine Temperatur im Bereich von 200°C bis zu einer Temperatur, welche der heißesten Temperatur in der heterogenkatalysierten Gasphasenoxidation entspricht und welche oberhalb 200°C liegt, temperiert und bei dieser Temperatur dem Brennkopf zuführt.

## Beschreibung

Die vorliegende Erfindung betrifft ein Verfahren zur Verbrennung eines Sauerstoff und eine brennbare Komponente enthaltenden Abgases, welches aus der heterogenkatalysierten Gasphasenoxidation einer anorganischen oder organischen Verbindung stammt, in einer Brennkammer.

Abgase, welche eine brennbare Komponente zusammen mit Sauerstoff enthaltenden werden bei vielen verschiedenen heterogenkatalysierten Oxidationsverfahren gebildet. Aufgrund des simultanen Gehalts eines Oxidationsmittels (Sauerstoff) und einer brennbaren Komponente bedarf die thermische Reinigung derartiger Abgase, also deren Verbrennung, besonderer Sicherheitsmaßnahmen, insbesondere in Bezug auf eine sichere und verlässliche Vermeidung von Flammenrückschlägen.

Eine Übersicht über oxidative Reinigungsverfahren von Abgasen, insbesondere über die katalytischen und thermischen Reinigungsverfahren findet sich in J.M. Klobucar, Chem. Eng., February 2002, Seite 62 bis 67.

Bei der katalytischen Abgasreinigung wird das Abgas bei Temperaturen von typischerweise 200 bis 650°C in Gegenwart von Luft und eines Katalysators katalytisch in umweltfreundlichere Verbindungen überführt. Durch den Einsatz von Katalysatoren wird gegenüber einer reinen Verbrennung des Abgases eine weitaus niedrigere Betriebstemperatur ermöglicht, was zu Vorteilen in der Gesamtenergiebilanz und der Werkstoffwahl führt. Die Nachteile der katalytischen Abgasreinigung stehen in engem Zusammenhang mit dem Einsatz der Katalysatoren. Diese enthalten zumeist Edelmetalle wie etwa Palladium oder Platin und neigen daher bei Kontakt mit verschiedenen Verbindungen zur reversiblen oder irreversiblen Schädigung. Ist mit derartigen Verbindungen, sogenannten Katalysatorgiften, zu rechnen, so ist im Allgemeinen ein Guardbett vorzuschalten. Da die Katalysatoren auch bei Abwesenheit von Katalysatorgiften nur eine begrenzte Lebensdauer besitzen, ist für einen verlässlichen und dauerhaften Betrieb einer katalytischen Abgasreinigung häufig eine doppelte Ausführung des Oxidationsreaktors erforderlich. Des Weiteren besteht bei Abgasen mit einem hohen Gehalt an brennbaren Komponenten die Gefahr zu hoher Reaktionstemperaturen und eines Flammenrückschlags sowie die Gefahr einer Schädigung des Katalysators und der Anlage.

Bei der thermischen Abgasreinigung wird das Abgas bei Temperaturen von typischerweise 800 bis 1000°C in Gegenwart von Luft und gegebenenfalls eines sogenannten Stützbrennstoffs zu umweltfreundlicheren Verbindungen, zumeist Wasser und Kohlendioxid, verbrannt. Man unterscheidet im Allgemeinen zwischen einem Direktflammen-Oxidator, einem rekuperativen Oxidator und einem regenerativen Oxidator.

Beim Direktflammen-Oxidator wird das nicht vorgewärmte, zu reinigende Abgas mit Luft in einer Flamme, welche durch einen Stützbrennstoff wie beispielsweise Erdgas oder ÖI erzeugt wird, verbrannt. Um einen Flammenrückschlag zu vermeiden, befindet sich in der Regel am Eintritt der Brennkammer eine Geschwindigkeitsstrecke, bei der die Strömungsgeschwindigkeit des zugeführten Abgases höher ist als die Flammenrückschiagsgeschwindigkeit. Nachteilig am Direktflammen-Oxidator ist der hohe Verbrauch an Stützbrennstoff, insbesondere bei niedriger Konzentration an brennbaren Komponenten, da das zu verbrennende Abgas relativ kalt eingespeist wird und somit erst mit Hilfe der Verbrennungswärme des Stützbrennstoffs auf die gewünschte Verbrennungstemperatur gebracht werden muss.

Beim rekuperativen Oxidator wird das nicht vorgewärmte, zu reinigende Abgas durch die Abwärme der idealerweise autothermen Verbrennung im Oxidator vorgeheizt und anschließend in der eigentlichen Brennkammer mit Luft verbrannt. Die Vorheizung erfolgt dabei im Allgemeinen derart, dass das zugeführte Abgas vor Eintritt in die Brennkammer erst durch einen Wärmetauscher, welcher auf der anderen Seite mit dem heißen Rauchgas betrieben wird, strömt. Reicht der Gehalt an brennbaren Komponenten zur autothermen Verbrennung nicht aus, kann die fehlende Energie durch einen Hilfsbrenner eingebracht werden. Erst durch die genannte Vorheizung wird eine weitgehend autotherme Verbrennung ermöglicht, da das zu verbrennende Abgas bereits heiß in die Brennkammer strömt. Genau dies hat jedoch auch einen entscheidenden Nachteil. Da mit steigender Temperatur im Abgas auch dessen Zündwilligkeit steigt, besteht die Gefahr des Flammenrückschlags bis in den Wärmetauscher hinein und somit die Gefahr größerer Schäden. Diese Gefahr ist umso ausgeprägter je höher die Konzentration an brennbaren Komponenten liegt und je geringer die Strömungsgeschwindigkeit ist. Daher ist insbesondere bei Abgasen mit hoher Konzentration an brennbaren Komponenten und/oder starken Schwankungen in der Zusammensetzung und Menge der sichere Einsatz eines rekuperativen Oxidators nicht gewährleistet.

Beim regenerativen Oxidator wird das nicht vorgewärmte, zu reinigende Abgas über ein heißes Wärmespeichermedium vorgeheizt und in einer sich anschließenden Brennkammer idealerweise autotherm verbrannt. Die heißen Rauchgase werden dann über ein zweites Wärmespeichermedium, welche sich gerade im regenerativen Modus befindet, geleitet und heizen dieses dabei auf. Hat das erstgenannte Wärmespeichermedium soviel an Temperatur verloren, dass die gewünschte Verbrennung nicht mehr gewährleistet ist, so wird über Kreuz umgeschaltet und das zweite, aufgeheizte Wärmespeichermedium zur Aufheizung genutzt. Reicht der Gehalt an brennbaren Komponenten zur autothermen Verbrennung nicht aus, kann die fehlende Energie durch einen Hilfsbrenner eingebracht werden. Auch beim regenerativen Oxidator ist erst durch die genannte Vorheizung eine weitgehend autotherme Verbrennung möglich. Wie bereits zuvor beim rekuperativen Oxidator beschrieben, besteht auch beim regenerativen Oxidator bei Abgasen mit hoher Konzentration an brennbaren Komponenten die Gefahr, dass die Oxidationsreaktion bereits im Bett des Wärmespeichermediums durchgeht, das heißt zu einem unkontrollierten Temperaturanstieg führt, welcher die Anlage schädigen kann. Auch besteht damit die Gefahr des Flammenrückschlags bis in den Wärmetauscher hinein und somit die Gefahr größerer Schäden. Daher ist bei Abgasen mit hoher Konzentration an brennbaren Komponenten und/oder starken Schwankungen in der Zusammensetzung und Menge der sichere Einsatz eines regenerativen Oxidators nicht gewährleistet. Ferner ist der regenerative Oxidator aufgrund seiner mindestens zwei Wärmespeicher-Kammern, welche jeweils für eine Aufheizung des nicht vorgewärmten Abgases ausgelegt sind, sehr groß und apparativ aufwändig.

Um einen Flammenrückschlag sicher zu unterbinden, werden in der Abgaszufuhr zum Oxidator im Allgemeinen in Abhängigkeit vom Gefährdungspotenzial mehrere und voneinander unabhängige Sicherheitsmaßnahmen, wie Flammensperren und/oder Verdünnung des Abgases und/oder stromaufwärts installierte Analysengeräte, die das Zündverhalten des Abgases analysieren eingesetzt. Übersichten hierzu finden sich beispielsweise in G.-G. Börger et al., VDI-Berichte Nr. 286, 1977, Seite 131 bis 134, in K. Schampel et al., Gas wärme international 27, 1978, November, Seite 629 bis 635 und in W. Hüning, Chem.-Ing.-Tech. 57, 1985, Seite 850 bis 857. Bekannte Flammensperren sind beispielsweise Tauchsicherungen, Flammenfilter, Bandsicherungen, Detonationssicherungen, Geschwindigkeitsstrecken, Zuführungen von Frischluft oder rückzündsichere Eindüsungen in die Brennkammer. Eine entsprechende Verdünnung des Abgases kann beispielsweise mit Luft erreicht werde. So ist in der letztgenannten Literaturstelle in der dortigen Abbildung 5 eine Kombination aus Tauchsicherung, Frischluftzufuhr mit Geschwindigkeitsstrecke, Detonationssicherung und rückzündsichere Eindüsung in die Brennkammer. Der Einsatz einer Geschwindigkeitsstrecke ermöglicht zwar bei Aufrechterhaltung der nötigen Mindestgeschwindigkeit eine sichere Unterbindung des Flammenrückschlags, besitzt aber den entscheidenden Nachteil, dass durch die Zufuhr weiterer Luft zur Aufrechterhaltung der erforderlichen Strömungsgeschwindigkeit die Gesamtmenge an Abgas steigt und somit auch gegebenenfalls der Energiebedarf für dessen Aufheizung vor der Verbrennung.

Es bestand daher die Aufgabe, ein Verfahren zur Reinigung eines Sauerstoff und eine brennbare Komponente enthaltenden Abgases zu finden, welches die oben genannten Nachteile nicht besitzt, einen sicherheitstechnisch sicheren Dauerbetrieb gewährleistet, energetisch gesehen auch bei einer deutlichen Unterschreitung der unteren Explosionsgrenze des anfallenden Abgases weitgehend autark ist und insbesondere auch wechselnde Abgasmengen und wechselnde Abgaszusammensetzungen problemlos verkraftet.

Demgemäss wurde ein Verfahren zur Verbrennung eines Sauerstoff und eine brennbare Komponente enthaltenden Abgases, welches aus der heterogen katalysierten Gasphasenoxidation einer anorganischen oder organischen Verbindung stammt, in einer Brennkammer gefunden, das dadurch gekennzeichnet ist, dass man das Abgas auf eine Temperatur im Bereich von 200°C bis zu einer Temperatur, welche der heißesten Temperatur in der heterogenkatalysierten Gasphasenoxidation entspricht und welche oberhalb 200°C liegt, temperiert und bei dieser Temperatur dem Brennkopf zuführt.

Unter dem Begriff Verbrennung ist die thermische Umsetzung der im Abgas enthaltenen brennbaren Komponente mit Sauerstoff zu verstehen, welche üblicherweise in einem Temperaturbereich von 700 bis 1200°C erfolgt. Die Verbrennung erfolgt dabei in einer sogenannten Brennkammer, in die das zu verbrennende Abgas über einen Brennkopf eingeleitet wird. Bei einem entsprechend hohen Gehalt an brennbaren Komponenten und/oder einer entsprechend hohen Temperatur des zugeführten Abgases ist gegebenenfalls eine autotherme Verbrennung möglich. Eine autotherme Verbrennung zeichnet sich dadurch aus, dass der erforderliche Brennstoff ausschließlich aus dem zu verbrennenden Abgas stammt. Ist der Gehalt an brennbaren Komponenten und/oder die Temperatur des Abgases entsprechend niedrig, so kann der Einsatz eines sogenannten Hilfs- oder Stützbrenners erforderlich sein. Dieser kann als separater Brenner oder integriert in dem oben genannten Brennkopf vorliegen und wird mit einem zusätzlichen Brennstoff, beispielsweise Erdgas oder Öl, betrieben und liefert die für die Verbrennung erforderliche Restenergie. Im Allgemeinen enthalten auch Brennkammern, welche autotherm betrieben werden, einen Stützbrenner, um insbesondere das Anfahren der Anlage zu ermöglichen und bei Schwankungen oder Störungen der Abgaszufuhr eine fortlaufende Verbrennung sicher zu stellen.

Bei der Verbrennung wird das zugeführte Abgas in überwiegend umweltfreundlichere Verbindungen überführt. Enthält das Abgas als brennbare Komponenten nur Wasserstoff, Kohlenstoff und/oder Sauerstoff enthaltende Verbindungen, so werden diese in der Regel zu Wasser und Kohlendioxid umgesetzt. Enthält das Abgas zudem noch weitere Elemente, wie beispielsweise Chlor oder Schwefel, so werden diese in stabilere Chlor- oder Schwefelverbindungen, wie beispielsweise Chlorwasserstoff, Chloroxide oder Schwefeloxide, überführt. Das durch die oxidative Umsetzung erhaltene Gas wird als sogenanntes Rauchgas bezeichnet.

Das beim erfindungsgemäßen Verfahren einzusetzende Abgas stammt aus der heterogenkatalysierten Gasphasenoxidation einer anorganischen oder organischen Verbindung. Heterogenkatalysierte Gasphasenreaktionen sind dem Fachmann allgemein bekannt. Bei der heterogenkatalysierten Gasphasenoxidation wird das zu oxidierende Edukt zusammen mit einem Sauerstoff enthaltenden Gas gasförmig durch einen geeigneten Reaktor, welcher einen heterogenen Katalysator enthält, geleitet und dabei bei einer erhöhten Temperatur im Bereich von üblicherweise 200 bis 600°C zu dem gewünschten Wertprodukt sowie Nebenprodukten oxidiert. Aufgrund der im Allgemeinen starken Exothermie der Oxidationsreaktionen werden hierfür in der Regel salzbadgekühlte Rohrbündelreaktoren eingesetzt. Das aus dem Reaktor abgeführte Reaktionsgas enthält somit das gewünschte Wertprodukt, mögliche Nebenprodukte, nicht umgesetztes Edukt, das bei der Reaktion gebildete gasförmige Reaktionswasser sowie restlichen, nicht-umgesetzten Sauerstoff. Im Allgemeinen wird das aus dem Reaktor abgeführte Reaktionsgas abgekühlt und das Wertprodukt abgetrennt. Die Abtrennung des Wertprodukts kann auf vielfältige Art und Weise erfolgen. Als geeignete Möglichkeiten seien beispielsweise die Absorption in einem Lösungsmittel, die Kondensation oder die Desublimation genannt. Je nach Ausführungsform und Art des heterogenkatalysierten Gasphasenoxidationsverfahrens können sich auch nach der Abtrennung des Wertprodukts noch weitere Schritte, wie beispielsweise zur Entfernung oder Verringerung des Reaktionswassers, zur Wäsche, zur Extraktionen oder zur Destillationen anschließen. Zudem ist es natürlich auch möglich, einen Teil des noch restliches, nichtumgesetztes Edukt enthaltenden Gases zum Reaktor zurückzuführen (Kreisgasfahrweise, Recycle Mode). Das verbleibende Gas, welches durch Verbrennung entsorgt werden soll, wird als Abgas bezeichnet. Es sei hervorgehoben, dass es im Rahmen der vorliegenden Erfindung unwesentlich ist, aus welcher heterogenkatalysierten Gasphasenreaktion das zu verbrennende Abgas stammt, sofern dieses Sauerstoff und eine brennbare Komponente enthält.

Wesentlich beim erfindungsgemäßen Verfahren ist, dass man das Abgas auf eine Temperatur im Bereich von 200°C bis zu einer Temperatur, welche der heißesten Temperatur in der heterogenkatalysierten Gasphasenoxidation entspricht und welche oberhalb 200°C liegt, temperiert und bei dieser Temperatur dem Brennkopf zuführt. Unter dem Brennkopf ist eine apparative Einrichtung zu verstehen, die dazu dient, das Abgas der Brennkammer zuzuführen und die Flamme zu bilden. Im Allgemeinen weist der Brennkopf Maßnahmen zur Gasverteilung und zur Verwirbelung, Flammenhalter und gegebenenfalls einen integrierten Zündmechanismus sowie einen Flammendetektor auf. Bevorzugt werden beim erfindungsgemäßen Verfahren rückzündsichere Brennköpfe eingesetzt, wie sie beispielsweise in G.-G. Börger et al., VDI-Berichte Nr. 286, 1977, Seite 133, Bild 5 und dazugehörender Text beschrieben sind.

Die genannte Untergrenze des Temperaturbereichs ermöglicht auch die autotherme Verbrennung von Abgasen mit einem geringen Gehalt an brennbaren Komponenten, da aufgrund der Vorwärmung im Bereich der Flamme dann nur eine geringere Wärmemenge zur Aufheizung auf die Zündtemperatur erforderlich ist. Ohne entsprechende Vorwärmung könnte bei Abgasen mit einem geringen Gehalt an brennbaren Komponenten die in der Flamme freiwerdende Wärme unter Umständen nicht mehr zur Aufheizung auf die Zündtemperatur ausreichen, was zu einem Erlöschen der Flamme führen würde. In der Praxis würde dies dann den Einsatz von Stützbrennstoff bedeuten.

Prinzipiell gilt, dass mit steigender Temperatur des Abgases auch Abgase mit sinkendem Gehalt an brennbaren Komponenten autotherm verbrannt werden können. Bevorzugt ist daher ein Verfahren, bei dem man das Abgas auf eine Temperatur im Bereich von 300°C bis zu einer Temperatur, welche der heißesten Temperatur in der heterogenkatalysierten Gasphasenoxidation entspricht und welche oberhalb 300°C liegt, temperiert und bei dieser Temperatur dem Brennkopf zuführt.

Besonders bevorzugt ist ein Verfahren, bei dem man das Abgas auf eine Temperatur im Bereich von 50°C unterhalb der Temperatur, welche der heißesten Temperatur in der heterogenkatalysierten Gasphasenoxidation entspricht, bis zu einer Temperatur, welche der heißesten Temperatur in der heterogenkatalysierten Gasphasenoxidation entspricht, temperiert und bei dieser Temperatur dem Brennkopf zuführt.

Die genannte Obergrenze des Temperaturbereichs stellt sicher, dass das Abgas stets in einem Temperaturbereich liegt, in dem eine Explosion ohne zusätzliche Zündquelle und somit eine Explosion im Abgassystem ausgeschlossen ist. Der Effekt beruht letztendlich darauf, dass bei der heterogenkatalysierten Gasphasenoxidation bereits eine entsprechende Temperatur im Reaktor vorlag und das Reaktionsgemisch aufgrund der Oxidationsreaktion und der nachfolgenden Abtrennung des Wertprodukts an brennbaren Komponenten verarmt ist sowie diese gegenüber den Komponenten an der Stelle der heißesten Temperatur in der heterogenkatalysierten Gasphasenoxidation aufgrund des höheren Oxidationsgrads energieärmer sind und deren untere Explosionsgrenze somit sogar noch höher liegt. Als untere Explosionsgrenze ist dabei die unter dem vorhandenen Druck und der vorhandenen Gaszusammensetzung maßgebende Explosionsgrenze zu verstehen.

Der Vollständigkeit halber sei erwähnt, dass die heißeste Temperatur in der heterogenkatalysierten Gasphasenoxidation allgemein auch als sogenannte Hotspot-Temperatur oder Heißpunkt-Temperatur bezeichnet wird.

Aus Sicherheitsgründen wird die heterogenkatalysierte Gasphasenoxidation der anorganischen oder organischen Verbindung, aus der das zu verbrennende Abgas stammt, bevorzugt in einem Bereich unterhalb der unteren Explosionsgrenze durchgeführt. Darunter ist zu verstehen, dass an jedem Ort im heterogenkatalysierten Gasphasenoxidationsverfahren bei der vorliegenden Temperatur, dem vorliegenden Druck und der vorliegenden Gaszusammensetzung die untere Explosionsgrenze unterschritten wird.

Die Temperatur des aus dem heterogenkatalysierten Gasphasenoxidationsverfahren stammenden Abgases liegt im Allgemeinen unterhalb der heißesten Temperatur der heterogenkatalysierten Gasphasenoxidation und in der Regel auch unterhalb von 200°C. Daher wird beim erfindungsgemäßen Verfahren das Abgas im Allgemeinen auf die gewünschte Temperatur vorgewärmt. Die Vorwärmung kann direkt oder indirekt erfolgen. Bei der direkten Vorwärmung wird ein heißes Gas, bevorzugt heißes Rauchgas, dem Abgas temperaturgeregelt zugemischt. Bei der indirekten Vorwärmung wird das Abgas über einem Wärmetauscher temperiert. Dieser kann beispielsweise mit dem heißen Rauchgas, der heißen Salzschmelze aus dem Reaktor der heterogenkatalysierten Gasphasenoxidation oder durch andere Wärmequelle, etwa überhitztem Dampf, betrieben werden. Bevorzugt temperiert man das Abgas über einen Wärmetauscher, welcher mit dem durch die Verbrennung freiwerdenden Rauchgas beheizt wird. Dadurch wird eine energieautarke Temperierung des Abgases ermöglicht.

Die Temperierung des Abgases über einen Wärmetauscher, welcher mit dem durch die Verbrennung freiwerdenden Rauchgas beheizt wird, kann auf vielfältige Art und Weise realisiert werden. So ist es beispielsweise möglich, dass man die Temperatur im Abgas über das Verhältnis zwischen dem durch den Wärmetauscher strömenden Abgasstrom und einem durch einen Umgang strömenden Abgasstrom regelt. Bei dieser Variante leitet man also einen Teil des Abgasstroms zur Vorwärmung durch einen mit dem Rauchgas betriebenen Wärmetauscher, wohingegen der andere Teil des Abgases durch einen Umgang um den Wärmetauscher herumgeleitet wird. Beide Ströme werden anschließend wieder zusammengeführt. Im Allgemeinen wird die Mischtemperatur kontinuierlich gemessen und durch einen Vergleich mit der gewünschten Solltemperatur das Abgasverhältnis zwischen Wärmetauscher und Umgang geregelt. Liegt die Mischtemperatur oberhalb der Solltemperatur, so wird im einfachsten Fall durch Erhöhung des Abgasstroms, welcher durch den Umgang geleitet wird, und Verringerung des Abgasstroms, welcher durch den Wärmetauscher geleitet wird, die Mischtemperatur nach unten angepasst und umgekehrt. Vorteilhafterweise wird auch die Temperatur im Abgasstrom, welcher den Wärmetauscher verlässt, kontinuierlich gemessen und über einen weiteren Regelkreis auf eine Temperatur, welche maximal der heißesten Temperatur in der heterogenkatalysierten Gasphasenoxidation entspricht, gehalten. Als mögliche Maßnahmen zur Sicherstellung, dass die genannte maximale Temperatur nicht überschritten wird, seien beispielsweise die Zufuhr kalten und bevorzugt sauerstoffarmen Gases vor dem Wärmetauscher oder die Regelung der Menge oder der Temperatur des durch den Wärmetauscher strömenden Rauchgases. Die Regelung der Menge des hindurchströmenden Rauchgases kann beispielsweise durch eine Regelklappe im Rauchgassystem vor dem Wärmetauscher und entsprechendem Umgang für die restliche Rauchgasmenge um den Wärmetauscher herum erfolgen. Die Temperatur des hindurchströmenden Rauchgases kann beispielsweise durch eine Mischung von Rauchgasen verschiedener Temperaturen durch partielle und geregelte Rückführung von kälterem Rauchgas, welches stromabwärts beispielsweise nach Durchleitung durch weitere Wärmetauscher vorliegt, erfolgen.

Bevorzugt regelt man beim erfindungsgemäßen Verfahren die Temperatur im Abgas über das Verhältnis zwischen dem durch den Wärmetauscher strömenden Abgasstrom und einem durch einen Umgang strömenden Abgasstrom und zusätzlich die Temperatur am Ausgang des Wärmetauschers über den Volumenstrom des durch den Wärmetauscher strömenden Rauchgases. Der genannte Volumenstrom kann, wie bereits oben beschrieben, beispielsweise durch eine Regelklappe im Rauchgassystem vor dem Wärmetauscher und entsprechendem Umgang für die restliche Rauchgasmenge geregelt werden.

Um trotz der oben genannten Maßnahmen zur weiteren Sicherheit einen Flammenrückschlag faktisch auszuschließen, setzt man beim erfindungsgemäßen Verfahren in der Abgaszufuhr im Allgemeinen noch eine oder mehrere Sicherheitsmaßnahmen gegen Flammenrückschlag ein. Als geeignete Maßnahmen seien Geschwindigkeitsstrecken, Hochgeschwindigkeitsventile, Flammendurchschlagssicherungen, wie Tauchsicherungen, Flammenfilter, Bandsicherungen, Detonationssicherungen und Maßnahmen wie die rückzündsichere Eindüsung in die Brennkammer genannt. Sie sind beispielsweise in G.-G. Börger et al., VDI-Berichte Nr. 286, 1977, Seite 131 bis 134, in K. Schampel et al., Gas wärme international 27, 1978, November, Seite 629 bis 635 und in W. Hüning, Chem.-Ing.-Tech. 57, 1985, Seite 850 bis 857 beschrieben. Je nach Art des Abgases und der gewünschten Sicherheit können auch mehrere dieser Sicherheitsmaßnahmen hintereinander eingesetzt werden. Bevorzugt befindet sich vor dem Eingang in die Brennkammer eine Flammendurchschlagssicherung, welche insbesondere bei einer plötzlichen Störung des Betriebs einen Flammenrückschlag verhindert. Des Weiteren ist es gegebenenfalls von Vorteil, das temperierte Abgas vor der Einleitung in die Brennkammer durch eine Geschwindigkeitsstrecke oder ein Hochgeschwindigkeitsventil zu leiten, wobei die Strömungsgeschwindigkeit des hindurchströmenden Gases bevorzugt höher ist als die Flammenrückschlagsgeschwindigkeit. In einer besonders bevorzugten Ausführungsform unter Einsatz einer Geschwindigkeitsstrecke kann die erforderliche hohe Gasgeschwindigkeit durch eine partielle Rückführung von Rauchgas erreicht werden.

In einer besonders bevorzugten Variante des erfindungsgemäßen Verfahrens wird das gebildete, heiße Rauchgas sowohl zur Vorwärmung des Abgases, wie bereits weiter oben beschrieben, als auch zur Aufheizung externer Energieträger energetisch verwertet. Als energetische Verwertung seien hier insbesondere die Erzeugung von Warmwasser, Dampf und überhitzten Dampf genannt. Die entsprechenden Verfahren zur energetische Verwertung des Rauchgases sowie die hierfür erforderlichen Apparate sind dem Fachmann allgemein bekannt.

Als brennbare Komponente im Abgas kommen beim erfindungsgemäßen Verfahren prinzipiell alle mit Sauerstoff oxidierbaren anorganischen oder organischen Verbindungen in Frage, welche unter den vorliegenden Bedingungen gasförmig vorliegen und aus der heterogenkatalysierten Gasphasenoxidation einer anorganischen oder organischen Verbindung stammen. Bei der brennbaren Komponente kann es sich um eine einzige Verbindung als auch um ein Gemisch verschiedener Verbindungen handeln. Geeignete brennbare Komponenten sind beispielsweise Wasserstoff, aliphatische, aromatische oder araliphatische Kohlenwasserstoffe, Alkohole, Aldehyde, Ketone, Carbonsäuren, Ammoniak oder Amine. Im Allgemeinen enthält das zu entsorgende Abgas 0,01 bis 10 Vol.-%, bevorzugt 0,01 bis 5 Vol.-% und besonders bevorzugt 0,1 bis 2 Vol.-% an brennbaren Komponenten.

Bevorzugt setzt man das erfindungsgemäße Verfahren ein Abgas ein, welche aus der heterogenkatalysierten Gasphasenoxidation von n-Butan und/oder n-Butenen zu Maleinsäureanhydrid, von o-Xylol zu Phthalsäureanhydrid, von Propen zu Acrylsäure, von Isobuten zu Methacrylsäure, von 1,2-Ethandiol zu Glyoxal, von Ethen zu Ethylenoxid, von Propen zu Acrolein, von Propen und Ammoniak zu Acrylnitril, von Olefinen zu Aldehyden oder Ketonen, von Methanol zu Formaldehyd und/oder von Methan und Ammoniak zu Blausäure und besonders bevorzugt von n-Butan und/oder n-Butenen zu Maleinsäureanhydrid, von o-Xylol zu Phthalsäureanhydrid, von Propen zu Acrylsäure, von Isobuten zu Methacrylsäure, von 1,2-Ethandiol zu Glyoxal und/oder von Ethen zu Ethylenoxid stammen.

Im Folgenden sind einige bevorzugte Ausführungsformen anhand von vereinfachten Verfahrensfließbildern näher erläutert. Die Apparate und Ventile sind mit Großbuchstaben versehen und in der Beschreibung bezeichnet. Die Leitungen sind in arabischen Zahlen durchnummeriert. Die Ein- und Ausgänge von Stoffströmen sind in römischen Zahlen nummeriert und ebenfalls in der Beschreibung näher erläutert. Die Meß- und Regeleinrichtungen tragen die übliche Nomenklatur mit nachgestellter Ziffer zur Durchnummerierung, wobei "T" für Temperaturmessung und "C" für Regelkreis steht.

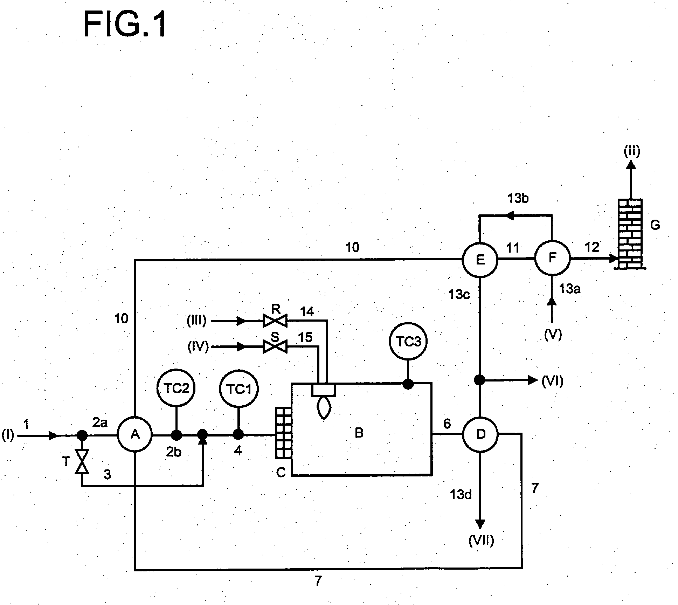

Das vereinfachte Verfahrensfließbild einer bevorzugten Ausführungsform mit Abgasseitigem Umgang um den Rauchgas/Abgas-Wärmetauscher ist in Abbildung 1 dargestellt. Das von der heterogen katalysierten Gasphasenoxidation stammende Abgas (I) wird über Leitung (1) zugeführt. Ein Teilstrom des Abgases wird dabei über Leitung (2a) und (2b) zur Vorwärmung durch einen Rauchgas-betriebenen Wärmetauscher (A) geführt. Der andere Teilstrom des Abgases wird über das Umgangsventil (T) und Leitung (3) um den Wärmetauscher herumgeleitet und in Leitung (4) mit dem vorgewärmten Abgas vereint. Dieses wird dann über eine statische Flammendurchschlagssicherung (C), bevorzugt eine Bandsicherung, geleitet und der Brennkammer (B) zugeführt. Diese umfasst einen oder mehrere Brennköpfe (nicht dargestellt) und enthält insbesondere zum Anfahren sowie für den Einsatz nicht autotherm brennbarer Abgase eine sogenannten Hilfsbrenner, der als separater Brenner oder integriert in dem oben genannten Brennkopf oder den Brennköpfen vorliegen kann und welcher bei Bedarf über Leitung (14) mit Luft (III) und über Leitung (15) mit Brennstoff (IV), beispielsweise Erdgas, betrieben werden kann. In der Brennkammer, in der gegebenenfalls auch noch weitere Brenner für andere Stoffe und Abgase integriert sein können, erfolgt die oxidative Umsetzung des Abgases zum Rauchgas. Dieses verlässt in heißem Zustand die Brennkammer (B) und wird über Leitung (6) zu einer Reihe hintereinandergeschalteter Wärmetauscher geführt. In Wärmetauscher (D) wird überhitzter Dampf (VII) erzeugt. Das Rauchgas wird dann über Leitung (7) durch den Rauchgas-/Abgas-Wärmetauscher (A) geführt und über Leitung (10) weitergeleitet und in Wärmetauscher (E) gesättigter Dampf und in Wärmetauscher (F) Warmwasser (Speisewasservorwärmung) erzeugt. Das energetisch genutzte und abgekühlte Rauchgas gelangt über Leitung (12) zum Schornstein (G) und wird als Rauchgas (II) in die Atmosphäre abgegeben. An dieser Stelle sei bemerkt, dass im Falle eines Schadstoffe enthaltenden Rauchgases, wie etwa Schwefeloxide oder Chlorverbindungen, vor der Emission in die Atmosphäre noch diverse Reinigungsvorrichtungen zwischengeschaltet sein können. Die energetische Verwertung des heißen Rauchgases erfolgt wie beispielhaft in Abbildung 1 dargestellt durch Erzeugung von Dampf (VI) und/oder überhitzten Dampf (VII) unter Einsatz der bereits genannten Wärmetauscher (F), (E) und (D). Es sei erwähnt, dass je nach Ausführungsform der Wärmetauscher (D) beispielsweise auch in der Brennkammer integriert sein kann, so dass Leitung (6) praktisch entfallen würde.

Im Folgenden sind die Regelkreise der bevorzugten Ausführungsform näher erläutert. Zur besseren Übersichtlichkeit wurden in Abbildung 1 die Steuerleitungen weggelassen. "TC1" mißt die Temperatur des Abgases nach der Zusammenführung des im Wärmetauscher (A) vorgewärmten Abgases und des, den Wärmetauscher (A) umgehenden Abgases. Dieser Meßwert dient zur Temperaturkontrolle des vorgeheizten Abgases und regelt entsprechend der Sollwertvorgabe über das Ventil (T) das Verhältnis zwischen dem durch den Wärmetauscher (A) strömenden Abgas und dem, dem Wärmetauscher (A) umgehenden Abgas. "TC2" mißt die Temperatur des im Wärmetauscher (A) vorgewärmten Abgases und löst bei Erreichen des eingestellten Maximalwertes, welcher sich in der Regel an der heißesten Temperatur in der heterogenkatalysierten Gasphasenoxidation orientiert, Maßnahmen aus, welche eine Überschreitung dieses Maximalwertes verhindern sollen. Als eine der geeigneten Maßnahmen sei exemplarisch die geregelte Zufuhr von kaltem Gas, beispielsweise einem inerten Spülgas genannt (der Übersichtlichkeit halber in Abbildung 1 nicht eingezeichnet). Erreicht die Temperatur in der Brennkammer (B) die obere Grenze des gewünschten Temperaturbereichs, so kann zur Temperaturhaltung über "TC3" die Einspeisung zusätzlicher (Umgebungs-)Luft in die Brennkammer angesteuert werden. Diese kann beispielsweise über Ventil (R) und Leitung (14) oder über eine zusätzliche Vorrichtung, welche in Abbildung 1 nicht dargestellt ist, zugeführt werden. Des Weiteren ist es auch möglich, über "TC3" auch das Umgehungsventil (T) anzusteuern, um die Temperatur des in die Brennkammer eingeführten Abgases zu senken. Dies kommt insbesondere dann in Betracht, wenn das Abgas einen hohen Gehalt an brennbaren Komponenten aufweist und somit also sein Energiegehalt relativ hoch ist. Des Weiteren ist es gegebenenfalls von Vorteil, die genannten Regelungen noch durch weitere Sicherheitsmaßnahmen zu ergänzen, wie beispielsweise durch eine Wandtemperaturüberwachung des Wärmetauschers (A), durch stromaufwärts installierte Analysengeräte, welche die Zündwilligkeit des Abgases nach dem Reaktor beziehungsweise nach der Abtrennung des Wertprodukts analysieren und gegebenenfalls auch Sicherheitsmaßnahmen im Bereich des Reaktorsbetriebs auslösen.

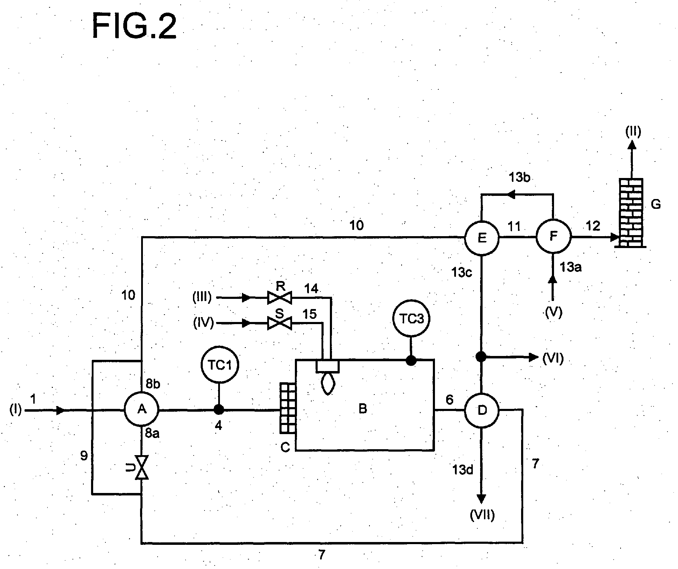

Abbildung 2 zeigt das vereinfachte Verfahrensfließbild einer bevorzugten Ausführungsform mit Rauchgas-seitigem Umgang um den Rauchgas/Abgas-Wärmetauscher. Im Gegensatz zu dem in Abbildung 1 dargestellten Verfahren wird in der vorliegenden Ausführungsform die Temperatur des Abgases durch eine Rauchgas-seitige Regelung des Wärmetauschers (A) gesteuert und das gesamte Abgas durch den Wärmetauscher (A) geleitet. Bei der Rauchgas-seitigen Regelung wird ein Teilstrom des Rauchgases über die Rauchgasklappe (U), Leitung (8a) und (8b) durch den Wärmetauscher (A) geführt. Der andere Teilstrom des Rauchgases wird über die Umgangsleitung (9) um den Wärmetauscher herumgeleitet. Bei dieser Ausführungsform regelt "TC1" entsprechend der Sollwertvorgabe die Rauchgasklappe (U) und somit die durch den Wärmetauscher (A) strömende Menge an Rauchgas. Neben den in der zuvor genannten Ausführungsform genannten Maßnahmen kann "TC3" auch die Rauchgasklappe (U) anzusteuern, um bei Bedarf beispielsweise die Temperatur des in die Brennkammer eingeführten Abgases zu senken.

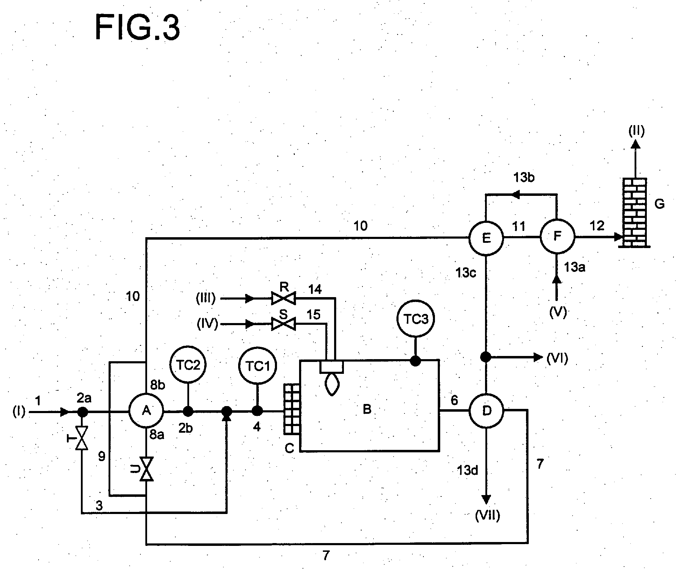

Abbildung 3 zeigt das vereinfachte Verfahrensfließbild einer bevorzugten Ausführungsform mit Abgas- und Rauchgas-seitigem Umgang um den Rauchgas/Abgas-Wärmetauscher. Bei dieser Ausführungsform wird die gewünschte Temperatur des im Wärmetauscher (A) vorgewärmten Abgases durch eine Rauchgas-seitige Regelung via "TC2" über die Rauchgasklappe (U) eingestellt. Die Mischtemperatur des Abgases, welches der Brennkammer zugeführt wird, wird via "TC1" über das Umgangsventil (T) eingestellt. Neben den in der erstgenannten Ausführungsform genannten Maßnahmen kann "TC3" je nach Bedarf sowohl das Umgangsventil (T) als auch die Rauchgasklappe (U) ansteuern, um bei Bedarf beispielsweise die Temperatur des in die Brennkammer eingeführten Abgases zu senken.

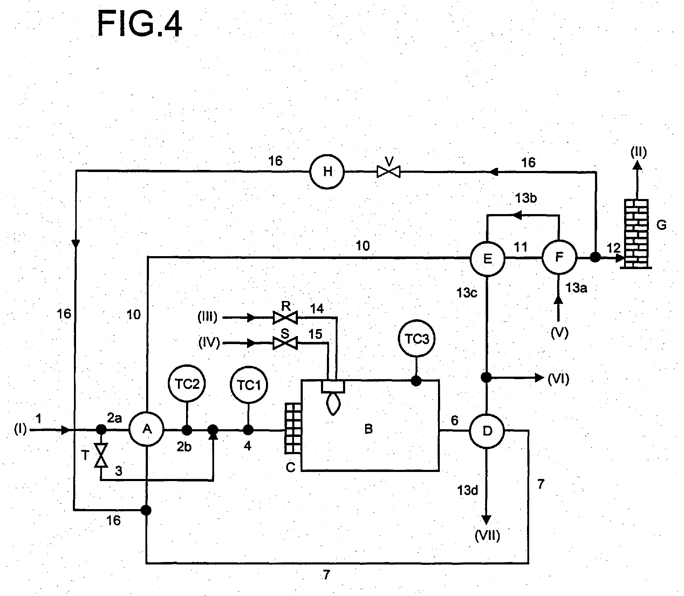

Abbildung 4 zeigt schließlich das vereinfachte Verfahrensfließbild einer bevorzugten Ausführungsform mit Abgas-seitigem Umgang um den Rauchgas/Abgas-Wärmetauscher und einer partiellen Rückführung von kälterem Rauchgas mittels eines Gebläses (H). Bei dieser Ausführungsform kann beispielsweise bei Erreichen der vorgegebenen Maximaltemperatur des Abgases nach dem Wärmetauscher (A) via "TC2" das Rückführungsventil (V) angesteuert werden, um über Leitung (16) kälteres Rauchgas zum Wärmetauscher zurückzuführen. Neben den in der erstgenannten Ausführungsform genannten Maßnahmen kann "TC3" je nach Bedarf sowohl das Umgangsventil (T) als auch das Rückführungsventil (V) ansteuern, um bei Bedarf beispielsweise die Temperatur des in die Brennkammer eingeführten Abgases zu senken.

Das erfindungsgemäße Verfahren ermöglicht die Verbrennung eines Sauerstoff und eine brennbare Komponente enthaltenden Abgases, welches aus der heterogenkatalysierten Gasphasenoxidation einer anorganischen oder organischen Verbindung stammt, in einer Brennkammer, unter Gewährleistung eines sicherheitstechnisch sicheren Dauerbetriebs. Das erfindungsgemäße Verfahren ist energetisch gesehen auch bei einer deutlichen Unterschreitung der unteren Explosionsgrenze des anfallenden Abgases weitgehend autark und verkraftet insbesondere auch wechselnde Abgasmengen und wechselnde Abgaszusammensetzungen problemlos. Durch die Temperierung des Abgases auf eine Temperatur, welche mindestens der genannten Untergrenze des Temperaturbereichs entspricht wird die autotherme Verbrennung auch bei einem Abgas mit einem geringen Gehalt an brennbaren Komponenten gefördert, da aufgrund der Vorwärmung im Bereich der Flamme dann nur eine geringere Wärmemenge zur Aufheizung auf die Zündtemperatur erforderlich ist. Durch die genannte Obergrenze des Temperaturbereichs wird sichergestellt, dass das Abgas stets in einem Temperaturbereich liegt, in dem eine Explosion ohne zusätzliche Zündquelle und somit eine Explosion im Abgassystem ausgeschlossen ist. Das erfindungsgemäße Verfahren ist des Weiteren verhältnismäßig einfach zu realisieren und zu betreiben.

## Patentansprüche

1. Verfahren zur Verbrennung eines Sauerstoff und eine brennbare Komponente enthaltenden Abgases, welches aus der heterogenkatalysierten Gasphasenoxidation einer anorganischen oder organischen Verbindung stammt, in einer Brennkammer, **dadurch gekennzeichnet, dass** man das Abgas auf eine Temperatur im Bereich von 200°C bis zu einer Temperatur, welche der heißesten Temperatur in der heterogenkatalysierten Gasphasenoxidation entspricht und welche oberhalb 200°C liegt, temperiert und bei dieser Temperatur dem Brennkopf zuführt.

2. Verfahren nach Anspruch 1, **dadurch gekennzeichnet, dass** man das Abgas auf eine Temperatur im Bereich von 300°C bis zu einer Temperatur, welche der heißesten Temperatur in der heterogenkatalysierten Gasphasenoxidation entspricht und welche oberhalb 300°C liegt, temperiert und bei dieser Temperatur dem Brennkopf zuführt.

3. Verfahren nach Anspruch 1, **dadurch gekennzeichnet, dass** man das Abgas auf eine Temperatur im Bereich von 50°C unterhalb der Temperatur, welche der heißesten Temperatur in der heterogenkatalysierten Gasphasenoxidation entspricht, bis zu einer Temperatur, welche der heißesten Temperatur in der heterogenkatalysierten Gasphasenoxidation entspricht, temperiert und bei dieser Temperatur dem Brennkopf zuführt.

4. Verfahren nach den Ansprüchen 1 bis 3, **dadurch gekennzeichnet, dass** man die heterogenkatalysierte Gasphasenoxidation der anorganischen oder organischen Verbindung in einem Bereich unterhalb der unteren Explosionsgrenze durchführt.

5. Verfahren nach den Ansprüchen 1 bis 4, **dadurch gekennzeichnet, dass** man das Abgas über einen Wärmetauscher, welcher mit dem durch die Verbrennung freiwerdenden Rauchgas beheizt wird, temperiert.

6. Verfahren nach Anspruch 5, **dadurch gekennzeichnet, dass** man die Temperatur im Abgas über das Verhältnis zwischen dem durch den Wärmetauscher strömenden Abgasstrom und einem durch einen Umgang strömenden Abgasstrom regelt.

7. Verfahren nach den Ansprüchen 5 bis 6, **dadurch gekennzeichnet, dass** man die Temperatur am Ausgang des Wärmetauschers über den Volumenstrom des durch den Wärmetauscher strömenden Rauchgases regelt.

8. Verfahren nach den Ansprüchen 1 bis 7, **dadurch gekennzeichnet, dass** man ein Abgas einsetzt, welches aus der heterogenkatalysierten Gasphasenoxidation von n-Butan und/oder n-Butenen zu Maleinsäureanhydrid, von o-Xylol zu Phthalsäureanhydrid, von Propen zu Acrylsäure, von Isobuten zu Methacrylsäure, von 1,2-Ethandiol zu Glyoxal und/oder von Ethen zu Ethylenoxid stammt.
